(19) Europäisches Patentamt
European Patent Office
Office européen des brevets

(11) EP 2 426 468 B1

(12) EUROPÄISCHE PATENTSCHRIFT

(45) Veröffentlichungstag und Bekanntmachung des Hinweises auf die Patenterteilung:
**23.05.2018   Patentblatt 2018/21**

(51) Int Cl.:
*G01G 13/24* *(2006.01)*       *G01G 13/00* *(2006.01)*
*G01G 23/00* *(2006.01)*       *B65B 1/32* *(2006.01)*
*B65B 3/28* *(2006.01)*

(21) Anmeldenummer: **10174992.7**

(22) Anmeldetag: **02.09.2010**

(54) **Verfahren zur Bereitstellung von Proben**

Sample provisioning method

Procédé de préparation d'échantillons

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**07.03.2012   Patentblatt 2012/10**

(73) Patentinhaber: **Mettler-Toledo GmbH**
**8606 Greifensee (CH)**

(72) Erfinder:
• **Nufer, Bruno**
**8308, Illnau (CH)**

• **Gluvakov, Siegfried**
**8732, Neuhaus (CH)**

(74) Vertreter: **Mettler-Toledo**
**IP Department**
**Im Langacher 44**
**8606 Greifensee (CH)**

(56) Entgegenhaltungen:
**EP-A1- 2 042 431       WO-A1-2006/003377**
**WO-A1-2009/044121     DE-A1- 19 920 494**

**Beschreibung**

Die Erfindung betrifft ein Verfahren zur Bereitstellung von Proben mittels einer Dosiervorrichtung sowie ein Computerprogramm, in welchem die Verfahrensschritte implementiert sind und eine Dosiervorrichtung, in welcher das Computerprogramm gespeichert ist.

Dosiervorrichtungen und Dosierverfahren der vorgenannten Art sind in vielen Bereichen der Industrie verbreitet und werden seit Jahren eingesetzt. Sie weisen meistens ein gravimetrisches Messinstrument beziehungsweise ein Wägesystem auf, mittels dem die ausdosierte Masse Dosiergut erfasst wird. Dabei reichen die abzumessenden Massen von Tonnen bis zu kleinsten Massen von wenigen Mikrogramm. Gerade das Dosieren kleinster Massen, beispielsweise bei der Entwicklung neuer Wirkstoffe erfordert höchste Präzision, da schon kleinste Abweichungen der Masse des Wirkstoffes grosse Auswirkungen auf die dem Dosierprozess nachfolgenden Versuche haben können. Beispielsweise kann die Reaktionsgeschwindigkeit von Stoffgemischen aufgrund von Massenabweichungen erheblich differieren, bei klinischen Tests die Auswirkung auf den Organismus der Testperson erheblich von den Erwartungen abweichen und dergleichen mehr.

Um die Versuche durchführen zu können, müssen viele Proben bereitgestellt werden. Beispielsweise werden kleine Massen pulverförmiger Substanzen in ein Zielgefäss eindosiert und in diesem durch die Zugabe eines Lösungsmittels aufgelöst. Die derart vorbereitete Probe wird anschliessend analysiert, beispielsweise in einem HPLC-Analysegerät.

In der EP 1 947 427 A1, WO2006/003377 A1 und DE 199 20 494 A1 ist eine Dosiervorrichtung zum Abmessen kleinster Massen und ein Verfahren zur Optimierung eines Dosiervorganges offenbart. Die Dosiervorrichtung umfasst ein Wägesystem mit einem Lastaufnehmer, eine Prozessoreinheit, eine Speichereinheit und eine auswechselbare Dosiereinheit. Die Dosiereinheit ist oberhalb des Lastaufnehmers angeordnet und auf den Lastaufnehmer ist ein Zielgefäss auflegbar. Damit Zielgefässe mit unterschiedlicher Höhe verwendet werden können, ist die Dosiereinheit relativ zum Lastaufnehmer verschiebbar angeordnet.

Bei der Dosierung kleinster Massen spielen Umgebungseinflüsse eine wichtige Rolle. Luftbewegungen, Temperaturschwankungen und dergleichen mehr können das Wägeergebnis beziehungsweise die Wägewerte des Wägesystems stark beeinflussen. Wenn diese Wägewerte zur Steuerung des Dosiervorgangs und zur nachfolgenden Bemessung der Lösungsmittelmenge beziehungsweise Lösungsmittelmasse verwendet werden, kann dies zu fehlerhaften Proben führen.

Beim Dosieren pulverförmiger Substanzen mit der vorangehend beschriebenen Dosiervorrichtung konnte festgestellt werden, dass auch elektrostatische Einflüsse das Wägeresultat massgeblich verfälschen können. Sobald das Zielgefäss und/oder die Dosiereinheit Materialien aufweisen die nicht elektrisch leitfähig sind, können sich diese elektrostatisch aufladen. Dies kann dazu führen, dass sich das Zielgefäss und die Dosiereinheit gegenseitig abstossen oder anziehen. Dem entsprechend ermittelt das Wägesystem von der tatsächlich im Zielgefäss vorhandenen Masse abweichende, höhere oder tiefere Wägewerte.

Zur Lösung dieses Problems werden Ionisatoren angeboten, mittels derer die Umgebungsluft der Dosiereinheit und des Zielgefässes ionisiert und dadurch die statischen Ladungen wirkungsvoll eliminiert werden können. Da diese Ionisatoren mit Hochspannungen betrieben werden und daher ein elektromagnetisches Feld erzeugen, kann der Betrieb dieser Geräte ebenfalls die Wägewerte des Wägesystems negativ beeinflussen. Ferner können Luftmassen durch den Ionenstrom des Ionisators in Bewegung versetzt werden und diese auf den Lastaufnehmer einwirken.

Ein weiterer Lösungsansatz besteht darin, dass alle Teile der Dosiervorrichtung, der Dosiereinheit und des Zielgefässes elektrisch leitend gemacht und geerdet sind. Dieser Lösungsansatz führt in den meisten Fällen zu sehr guten Ergebnissen. Die Beschichtung oder Fertigung von Metallteilen führt aber zu einem erheblichen Mehraufwand, da entweder nicht leitende Materialien mit einer leitenden Schicht versehen werden müssen oder die Teile aus Metall zu fertigen sind.

Umfangreiche Versuche haben zudem gezeigt, dass sich nicht nur die Dosiereinheit und/oder das Zielgefäss elektrostatisch aufladen können. Auch einzelne, in ihrem elektrostatischen Verhalten kritische pulverförmige Substanzen können sich während des Dosiervorganges infolge von Trennvorgängen und Reibung erheblich elektrostatisch aufladen. Selbst der Einsatz elektrisch leitender, geerdeter Zielgefässe und Dosiereinheiten und/oder eines Ionisators kann dieses Problem nur unbefriedigend lösen. Beim Dosieren von Paracetamol zu Dosen von 12 Milligramm konnten beispielsweise aufgrund elektrostatischer Einflüsse Abweichungen von bis zu 40% zur vorbestimmten Masse beobachtet werden.

Der vorliegenden Erfindung liegt daher die Aufgabe zugrunde, ein Verfahren zur Bereitstellung von Proben mittels einer Dosiervorrichtung anzugeben, welches eine äusserst präzise Erfassung des ins Zielgefäss dosierten Dosierguts ermöglicht, sowie eine Dosiervorrichtung zur Durchführung dieses Verfahrens zu schaffen.

Diese Aufgabe wird mit einem Verfahren, einem Computerprogramm und einer Dosiervorrichtung gelöst, welche die im unabhängigen Patentanspruch angegebenen Merkmale aufweisen.

Um das erfindungsgemässe Verfahren zur Bereitstellung von Proben durchzuführen, muss eine Dosiervorrichtung vorhanden sein, welche ein Wägesystem mit einem Lastaufnehmer, eine Prozessoreinheit, eine Speichereinheit, einen Ionisator und eine auswechselbare Dosiereinheit umfasst. Auf den Lastaufnehmer ist ein Zielgefäss auflegbar. Die Dosiereinheit und/oder das Zielgefäss kann elektrisch isolierendes Material aufweisen, wobei die Dosiereinheit oberhalb des Lastaufnehmers angeordnet ist und relativ zum Lastaufnehmer zwischen einer ersten Position und einer zweiten Position verschiebbar oder verschwenkbar ist.

Im Verfahren zur Bereitstellung von Proben wird

- während die Dosiereinheit in der ersten Position ruht und auf dem Lastaufnehmer ein Zielgefäss aufgelegt ist, durch das Wägesystem ein Start-Wägewert ermittelt und in der Speichereinheit abgespeichert,

- die Dosiereinheit in die zweite Position gebracht,

  - der Ionisator eingeschaltet, wenn die Dosiereinheit von der ersten in die zweite Position verschoben wird,

- ein Dosiervorgang durchgeführt und Dosiergut mittels der Prozessoreinheit gemäss einer vorbestimmten Masse aus der Dosiereinheit in das Zielgefäss ausgetragen,

  - der Ionisator während des Dosiervorgangs periodisch ein- und ausgeschaltet, wobei bei der Erfassung von Wägezwischenwerten der Ionisator ausgeschaltet wird,

- die Dosiereinheit in die erste Position gebracht und

- während die Dosiereinheit in der ersten Position ruht, durch das Wägesystem ein End- Wägewert ermittelt.

Die vorbestimmte Masse ist der Sollwert, den der Benutzer durch eine entsprechende Eingabe in einer Eingabeeinheit der Dosiervorrichtung eingibt. Beim erfindungsgemässen Verfahren wird die Erkenntnis zunutze gemacht, dass es bei der Analyse von Proben nicht so sehr auf deren bereitgestellte Gesamtmasse ankommt, sondern dass die genaue Konzentration der in Lösungsmittel gelösten Substanz bekannt ist. Um die genaue Konzentration zu berechnen, müssen daher die Masse der Substanz und des Lösungsmittels möglichst genau gemessen werden können.

Um während des Dosiervorganges kein Dosiergut zu verschütten, muss die Dosiereinheit, beziehungsweise deren Austragungsöffnung sehr nahe über der Einfüllöffnung des Zielgefässes angeordnet sein. Die zweite Position ist somit auch abhängig von der Höhe des auf dem Lastaufnehmer aufgelegten Zielgefässes. Durch die erfindungsgemässe Verschiebung oder Verschwenkung der Dosiereinheit relativ zum Lastaufnehmer ist eine präzise Messung der tatsächlich ausdosierten Masse möglich, da der Einfluss elektrostatischer Anziehungskräfte im Quadrat der zunehmenden Beabstandung der Dosiereinheit zum Zielgefäss abnimmt. Folglich werden die Start- und End- Wägewerte, die zur Berechnung der tatsächlich im Zielgefäss vorhandenen Masse verwendet werden, beim erfindungsgemässen Verfahren immer in der maximal vom Zielgefäss beziehungsweise vom Lastaufnehmer beabstandeten, ersten Position gemessen.

In der Prozessoreinheit kann anschliessend der Start- Wägewert vom End- Wägewert subtrahiert werden. Hernach wird das Ergebnis als erfasste Masse des Dosiergutes in der Speichereinheit abgespeichert oder an eine Ausgabeeinheit oder ein Prozessleitsystem übermittelt. Die erfasste Masse ist ein unkorrigierter Istwert des im Zielgefäss befindenden Dosiergutes. Unkorrigiert deshalb, weil auch die in der ersten Position gemessenen Wägewerte aufgrund der elektrostatischen Ladungen fehlerbehaftet sein können, da der Abstand zwischen der ersten und zweiten Position zur Begrenzung der Dosiervorrichtungs- Abmessungen in vernünftigen Dimensionen gehalten werden sollte. In den meisten Fällen genügt aber die Bestimmung der erfassten Masse als unkorrigierter Istwert.

Um Dosiergut-Mischungen bereitstellen zu können, kann das beschriebene Verfahren noch weitere Schritte aufweisen, nämlich dass

- ausgehend von der erfassten Masse des Dosierguts und einem gewünschten Mischungsverhältnis, die Masse eines weiteren Dosierguts durch die Prozessoreinheit errechnet wird,

- die Dosiereinheit des bereits ausgetragenen Dosiergutes durch eine weitere Dosiereinheit mit dem weiteren Dosiergut ersetzt wird und

- die Verfahrensschritte des vorangehend beschriebenen Verfahrens mit der weiteren Dosiereinheit wiederholt werden.

Im Zusammenhang mit der vorliegenden Schrift ist der Begriff "Mischung" stets als Mischung mindestens zweier fester, pastenförmiger oder flüssiger Substanzen zu verstehen. Selbstverständlich kann die eine Substanz fest und die andere Substanz flüssig sein. Die mit einem Lösungsmittel versehenen Substanzen werden in der vorliegenden Schrift als "Lösung" bezeichnet, ungeachtet dessen, ob die Substanzen im Lösungsmittel aufgelöst sind oder nicht.

Die erste und zweite Position können auch zur Feststellung benutzt werden, ob überhaupt elektrostatische Ladungen vorhanden sind. Dies ist auf einfache Weise möglich. Wenn das Wägesystem für die erste Position und die zweite Position identische Wägewerte liefert (vorausgesetzt es findet kein Substanzaustrag statt), sind keine oder nur geringe elektrostatische Ladungen vorhanden. Folglich wird in der zweiten Position ein Test- Wägewert ermittelt und dieser mit dem Start- Wägewert verglichen. Wenn die beiden Wägewerte sich unterscheiden, kann der Dosiervorgang blockiert und der Benutzer gewarnt werden. Selbstverständlich kann auch ein in der Dosiervorrichtung angeordneter Ionisator automatisch oder durch den Benutzer ausgelöst, eingeschaltet werden, wenn mittels des vorangehend beschriebenen Vergleichs elektrostatische Ladungen detektiert werden.

Auch wenn die Wägewerte zur Berechnung der erfassten Masse Dosierguts in der ersten Position erfasst werden, können vorhandene elektrostatische Kräfte dort immer noch schwach auf das Wägesystem einwirken. Die erste und zweite Position ermöglichen mit Hilfe des coulombschen Gesetzes eine Ermittlung und Quantifizierung der in der ersten Position wirkenden elektrostatischen Kräfte. Das erfindungsgemässe Verfahren kann durch die weiteren Schritte erweitert werden, dass

- nach Abschluss des Dosiervorganges in der zweiten Position durch das Wägesystem ein Fehler- Wägewert ermittelt wird,

- dass aus dem End- Wägewert, dem Fehler- Wägewert und dem Abstand zwischen der ersten Position und der zweiten Position ein Korrekturwert berechnet wird und

- aus der erfassten Masse des Dosiergutes und dem Korrekturwert die korrigierte Masse des Dosiergutes errechnet wird.

Ausgehend von der erfassten oder korrigierten Masse Dosiergut und einer gewünschten Konzentration kann ferner die Masse eines hinzuzufügenden Lösungsmittels durch die Prozessoreinheit errechnet werden.

Zur Steuerung des Dosiervorgangs kann während des Dosiervorgangs durch das Wägesystem kontinuierlich, in diskreten, ereignisbestimmten oder zufälligen Zeitintervallen Wägezwischenwerte erfasst und diese zur Steuerung des Dosiervorganges der Prozessoreinheit zugeführt werden. Selbstverständlich können auch die Wägezwischenwerte durch einen vorangehend ermittelten Korrekturwert korrigiert werden.

Die Wägezwischenwerte können unterschiedlich verwendet werden. Am einfachsten ist die direkte Ansteuerung eines Verschlusskörpers der Dosiereinheit, wobei durch diesen die Auslassöffnung geschlossen wird, sobald der Wägezwischenwert gleich der vorbestimmten Masse ist. Diese Methode führt aber in der Regel zur Überschreitung der vorbestimmten Masse. Präzisere Resultate lassen sich dadurch erzielen, dass vorausgeschätzt wird, wann die Auslassöffnung geschlossen werden muss. Dies erfordert eine Auswertung mindestens zweier Wägezwischenwerte, deren Zeitintervall und der zum Zeitpunkt der Erfassung der Wägezwischenwerte vorhandenen Auslassquerschnitte der Dosiereinheit- Auslassöffnung. Daraus lässt sich ein die Fliesseigenschaften des Dosierguts charakterisierender Fliessparameter ermitteln. Anschliessend kann mittels des Fliessparameters ein Schliess-Zeitprofil geschätzt werden, wobei gemäss diesem Schliess-Zeitprofil der Auslassquerschnitt der Dosiereinheit durch den Verschlusskörper geschlossen wird. Die Dosiervorrichtung weist einen Ionisator auf, um bereits vor dem Beginn des Dosiervorgangs elektrostatische Ladungen möglichst abzubauen. Dieser wird eingeschaltet, wenn die Dosiereinheit von der ersten Position in die zweite Position verschoben wird.

Der Ionisator wird aber auch während des Dosiervorganges periodisch ein- und ausgeschaltet. Aufgrund der vorgenannten Auswirkungen erfolgt die Erfassung von Wägezwischenwerten aber nur dann, wenn der Ionisator ausgeschaltet ist.

Das erfindungsgemässe Verfahren beziehungsweise dessen Verfahrensschritte können in einem Computerprogramm implementiert sein, das in der Prozessoreinheit einer Dosiervorrichtung zur Bereitstellung von Proben ausführbar ist. Dies erlaubt dem Benutzer aus den vielen zur Verfügung stehenden Verfahrensschritten die gewünschten zusammenzustellen, wobei immer die folgenden Verfahrensschritte enthalten sein müssen, dass

- während die Dosiereinheit in der ersten Position ruht und auf dem Lastaufnehmer ein Zielgefäss aufgelegt ist, durch das Wägesystem ein Start-Wägewert ermittelt und in der Speichereinheit abgespeichert wird,

- die Dosiereinheit in die zweite Position gebracht wird,

- ein Dosiervorgang durchgeführt wird, wobei mittels der Prozessoreinheit Dosiergut in einer vorbestimmten Masse aus der Dosiereinheit in das Zielgefäss ausgetragen wird,

- die Dosiereinheit in die erste Position gebracht wird und

- während die Dosiereinheit in der ersten Position ruht, durch das Wägesystem ein End- Wägewert ermittelt wird.

Das Computerprogramm kann in einer Dosiervorrichtung verwendet werden. Diese Dosiervorrichtung umfasst zumindest ein Wägesystem, eine Prozessoreinheit, eine Speichereinheit und eine auswechselbare Dosiereinheit, wobei die Dosiereinheit oberhalb eines Lastaufnehmers des Wägesystems angeordnet ist und relativ zum Lastaufnehmer zwischen einer ersten Position und einer zweiten Position verschiebbar oder verschwenkbar ist. Vorzugsweise ist das Computerprogramm in der Speichereinheit abgespeichert. Dies bedeutet jedoch nicht, dass das Programm immer in der Speichereinheit abgespeichert sein muss. Es kann auch auf einem Datenträger oder einem Server gespeichert sein und über geeignete Mittel der Prozessoreinheit zugänglich gemacht werden.

Die Dosiervorrichtung verfügt vorzugsweise über eine Aufnahmevorrichtung, mit welcher eine Dosiereinheit auswechselbar verbindbar ist. Die Aufnahmevorrichtung kann derart ausgestaltet sein, dass sie, und folglich auch die mit der Aufnahmevorrichtung verbundene Dosiereinheit mit einer vertikalen Linearführung geführt ist und mittels einer Antriebseinheit zwischen der ersten Position und der zweiten Position verschiebbar ist.

Damit die erste Position beziehungsweise die zweite Position stabil gehalten werden kann, weist die Antriebseinheit zur Umwandlung einer Drehbewegung in eine Linearbewegung vorzugsweise eine selbsthemmende Gewindespindel auf.

Damit eine Probe mittels der Dosiervorrichtung vollständig vorbereitet werden kann, müssen auch Flüssigkeiten dosiert werden können. Die Dosiervorrichtung kann deshalb auch einen Flüssigdosierkopf aufweisen, mittels welchem eine durch die Prozessoreinheit errechnete Lösungsmittelmasse in das Zielgefäss dosierbar ist.

Einzelheiten des erfindungsgemässen Verfahrens und der erfindungsgemässen Dosiervorrichtung ergeben sich anhand der Beschreibung der in den Zeichnungen dargestellten Ausführungsbeispiele. Es zeigen:

Figur 1    eine erfindungsgemässe Dosiervorrichtung mit einer Antriebsvorrichtung und zwei mit Dosierköpfen versehenen Entnahmegefässen verschiedener Länge, wobei die Dosierköpfe von der Antriebsvorrichtung getrennt dargestellt sind;

Figur 2    die Dosiervorrichtung der Figur 1 in vereinfachter Aufsicht zur Darstellung der ersten Position und der zweiten Position sowie der Antriebseinheit zur Verschiebung der Dosiereinheit;

Figur 3    ein Flussdiagramm des erfindungsgemässen Verfahrens, das nur die absolut notwendigen Verfahrensschritte aufweist;

Figur 4    ein ausführliches Flussdiagramm des erfindungsgemässen Verfahrens mit weiteren möglichen Verfahrensschritten, wie sie in einem Computerprogramm implementiert sein können.

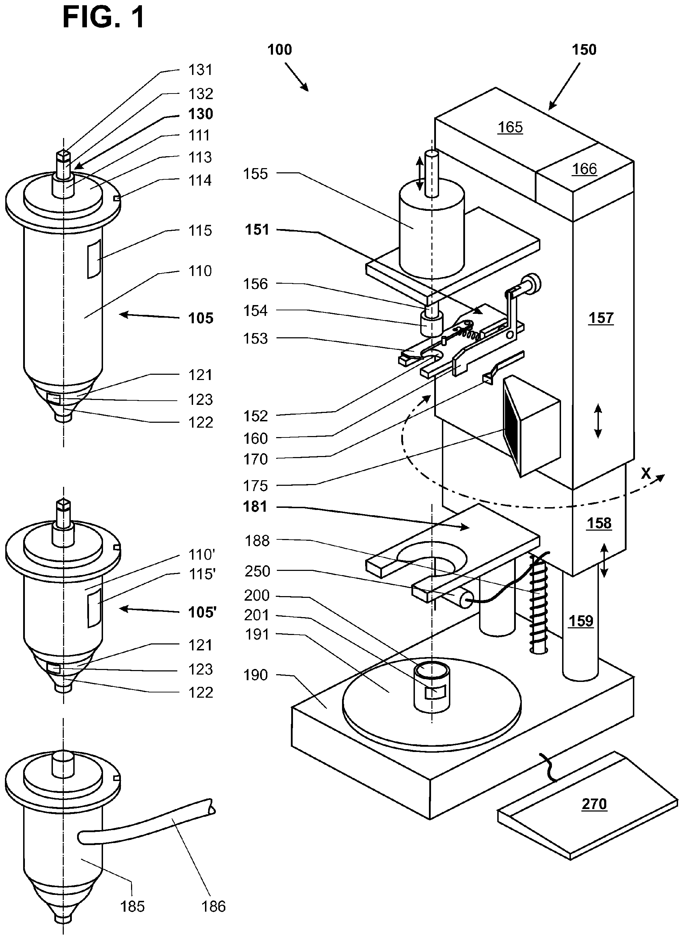

Die Figur 1 zeigt eine Dosiervorrichtung 100, die eine Antriebsvorrichtung 150 aufweist, in welche eine Dosiereinheit 105, 105' eingesetzt und aus dieser Antriebsvorrichtung 150 wieder entfernt werden kann. Die Dosiereinheit 105, 105' weist einen Dosierkopf 122 und ein Entnahmegefäss 110, 110' auf. Ferner ist ein Flüssigdosierkopf 185 dargestellt, welchem über einen Schlauchanschluss 186 Flüssigkeit zugeführt werden kann. Die Aussenhülle des Flüssigdosierkopfs 185 ist der Dosiereinheit 105, 105' nachempfunden, so dass dieser ebenfalls in die Antriebsvorrichtung 150 eingesetzt werden kann. Im Innern des Flüssigkeitsdosierkopfs 185 ist ein nicht dargestelltes Magnetventil zur Steuerung des Massendurchflusses angeordnet.

Die Antriebsvorrichtung 150 weist ein Oberteil 157 und ein Unterteil 158 auf, die in Betriebsstellung der Dosiervorrichtung 100 im Wesentlichen senkrecht linear von- und gegeneinander verschiebbar sind. Dies ermöglicht die Verwendung von Entnahmegefässen 110, 110' unterschiedlicher Länge. Um einen einfachen Wechsel der Dosiereinheit 105, 105' und einen sicheren und genauen Dosierbetrieb zu gewährleisten, sollte die Dosiereinheit 105, 105' beziehungsweise die Antriebsvorrichtung 150 geeignete mechanische, gegebenenfalls mechanische und elektrische Verbindungselemente aufweisen, welche miteinander formschlüssig korrespondieren. Die Dosiereinheit 105, 105' weist mindestens ein erstes Formelement 111 auf, welches durch ein am Oberteil 157 ausgebildetes oder mit diesem verbundenes erstes Gegenstück 151 in einer in Betriebsstellung der Dosiervorrichtung 100 horizontalen Ebene positioniert wird. Ferner weist die Dosiereinheit 105, 105' mindestens ein zweites Formelement 121 auf, welches durch ein am Unterteil 158 ausgebildetes oder mit diesem verbundenes zweites Gegenstück 181 in Bezug auf die Antriebsvorrichtung 150 räumlich positioniert wird. Dadurch wird die Dosiereinheit 105, 105', beziehungsweise deren Austrittsöffnung für das Dosiergut in Bezug auf ein Zielgefäss 200 genau ausgerichtet. Am zweiten Gegenstück 181 ist ein Ionisator 250 angeordnet, mit dessen Hilfe elektrostatische Ladungen der Dosiereinheit und/oder des Zielgefässes zumindest reduziert werden können. Die Dosiervorrichtung 100 ist mit einer Ein-/Ausgabeeinheit 270 verbunden, über welche beispielsweise eine vorbestimmte Masse und die erwünschte Massentoleranz sowie Mischungsverhältnisse und gewünschte Konzentrationen eingegeben werden können und über welche angezeigt wird, wann der Dosiervorgang beziehungsweise die Probenvorbereitung abgeschlossen ist. Ferner können über die Ein-/Ausgabeeinheit 270 verschiedenste Informationen abgerufen oder eingegeben werden. Des Weiteren kann eine Prozessoreinheit 165 der Dosiervorrichtung 100 verschiedene Meldungen und Warnungen generieren und über die Ein-/Ausgabeeinheit 270 an den Benutzer weitergeben.

Die Prozessoreinheit 165 steuert und regelt ferner die ganze Probenvorbereitung, insbesondere den Dosiervorgang. Dazu wird ein in der Speichereinheit 166 abgespeichertes Computerprogramm aufgerufen, wobei dessen implementierte Verfahrensschritte abgearbeitet werden. Durch die Prozessoreinheit 165 werden auch verschiedene Informationen abhängig vom jeweiligen Verfahrensschritt abgerufen, beispielsweise Masseninformationen vom Benutzer über die Ein-/Ausgabeeinheit 270 oder den Dosiervorgang betreffende Wägezwischenwerte von einem Wägesystem 190.

Das Entnahmegefäss 110 in Figur 1 weist eine zylindrische Grundform auf. Grundsätzlich sind aber auch andere Entnahmegefäss- Formen mit beispielsweise quadratischem, sechs- oder achteckigem Aussen- und Innenquerschnitt möglich. Der in die Antriebsvorrichtung 150 eingesetzte Dosierkopf 122 mit dem Entnahmegefäss 110, 110', weist in Betriebsstellung mit seiner Längsachse in senkrechte Richtung, wobei der Dosierkopf 122 am zweiten Ende des Entnahmegefässes 110, 110' angeordnet ist. Im Dosierkopf 122 ist ein nicht dargestellter, drehantreibbarer Verschlusskörper integriert, welcher mit einer im Entnahmegefäss 110 bewegbar gelagerten Verschlusswelle 132 verbunden ist. Der Körper des Entnahmegefässes 110 ist rohrförmig ausgebildet und wird an der Oberseite durch einen Deckel 113 abgeschlossen. Im Deckel 113 befindet sich eine Durchtrittsstelle 130, in welcher das dem Verschlusskörper entgegen gesetzte Ende der Verschlusswelle 132 drehbar gelagert ist und mit diesem Ende aus dem Entnahmegefäss 110 ragt. Dieses Ende der Verschlusswelle 132 weist ein Kupplungsteil 131 auf, welches in diesem Ausführungsbeispiel als Vierkantstück ausgebildet ist und zumindest während des Dosiervorganges über eine Kupplungshülse 154 mit dem in der Antriebsvorrichtung 150 integrierten Antrieb 155 verbunden ist. Zum Zwecke des Koppelns sollte der Antrieb 155 oder zumindest eine mit dem Antrieb verbundene Antriebswelle 156 in Betriebsstellung vorzugsweise senkrecht linear verschiebbar sein. Selbstverständlich können an Stelle dieses Vierkantstücks alle bekannten form- oder kraftschlüssig wirkenden Kupplungen verwendet werden, deren Kupplungshälften auf einfache Weise trennbar sind.

Damit das erste Formelement 111 nicht aus dem ersten Gegenstück 151 schlüpft, presst eine federbeaufschlagte Rückhalteklinke 153 das Formelement 111 bei eingesetzter Dosiereinheit 105, 105' gegen ein Schlitzende 152. Zum Entfernen der Dosiereinheit 105, 105' aus der Antriebsvorrichtung 150 kann die Rückhalteklinke 153 elektromechanisch oder pneumatisch geöffnet werden. Wie in Figur 1 dargestellt, kann durch eine entsprechende Gestaltung der Klinkennase die Rückhalteklinke 153 mit erheblichem Kraftaufwand beim Entfernen der Dosiereinheit 105, 105' durch das Formelement 111 beiseite geschoben werden. Die federbeaufschlagte Rückhalteklinke 153 und/oder das Schlitzende 152 kann zusätzlich elektrische Kontakte aufweisen, welche bei eingesetzter Dosiereinheit 105, 105', am ersten Formelement 111 oder am Entnahmegefäss 110 angeordnete Gegenkontakte berühren und dadurch eine elektrische Verbindung zwischen der Dosiereinheit 105, 105' und der Antriebsvorrichtung 150 herstellen. Eine solche elektrische Verbindung kann zu Erdungszwecken der Dosiereinheit 105, 105', oder wie nachstehend beschrieben, auch zur Verbindung mit einem in oder an der Dosiereinheit 105, 105' angeordneten Speichermodul 115, 115' 123 verwendet werden. In diesem Speichermodul 115, 115' 123 kann zusätzlich zu einem Fliessparameter auch die Länge des Entnahmegefässes 110, 110' abgespeichert werden, so dass sich die Antriebsvorrichtung 150 automatisch den unterschiedlichen Längen der Entnahmegefässe 110, 110' anpassen kann. Diese Ausführungen gelten selbstverständlich auch für den Flüssigdosierkopf 185.

Die Antriebsvorrichtung 150 weist ferner eine Verriegelungsvorrichtung 160 auf, welche bei eingesetzter Dosiereinheit 105, 105' auf den Deckel 113 einwirkt und die Dosiereinheit 105, 105' gegen eine Verschiebung in senkrechter Richtung sichert. Auch die Verriegelungsvorrichtung 160 kann, wie bereits bei der Rückhalteklinke 153 beschrieben, zusätzliche Kontakte und elektrische Verbindungsleitungen zum Speichermodul 115, 115',123 aufweisen und mechanisch, elektromechanisch oder pneumatisch betätigt werden.

Des Weiteren ist am Deckel 113 eine Aussparung 114 ausgebildet. In diese Aussparung 114 greift bei eingesetzter Dosiereinheit 105, 105' eine Verdrehsicherung 170 ein, um das vom Antrieb 155 auf die Dosiereinheit 105, 105' einwirkende Drehmoment aufzunehmen und abzustützen. Die Verdrehsicherung 170 ist in diesem Ausführungsbeispiel als einfache Federzunge ausgebildet, so dass beim Einsetzen der Dosiereinheit 105, 105' die Position der Aussparung 114 bezüglich der Verdrehsicherung 170 nicht beachtet werden muss. Sobald der Antrieb 155 über eine Antriebswelle 156 mit der Verschlusswelle 132 gekoppelt ist und ein Drehmoment auf die Verschlusswelle 132 einwirkt, wird die Dosiereinheit 105, 105' solange mitgedreht, bis die Verdrehsicherung 170 einrastet. Selbstverständlich kann die Dosiereinheit 105, 105' auch von Hand in die richtige Position gedreht werden. Als Verdrehsicherung 170 sind nicht nur Federzungen, sonder auch Bolzen, Stifte, Klemmpratzen und dergleichen verwendbar. Auch die Verdrehsicherung 170 kann, wie bereits bei der Rückhalteklinke 153 beschrieben, zusätzlich eine elektrische Verbindung zum Speichermodul 115, 115', 123 aufweisen. Zudem wirkt die dargestellte Verdrehsicherung 170 gleichzeitig als Überlastsicherung für den Antrieb, falls die Verschlusswelle 132 in der Dosiereinheit 105, 105' blockiert. Selbstverständlich kann die Aussparung 114 an einer beliebigen Stelle der Dosiereinheit 105, 105' ausgebildet und die Verdrehsicherung 170 an einer entsprechend dazu passenden Position an der Antriebsvorrichtung 150 angeordnet sein.

Das Speichermodul 115, 115', 123, muss aber nicht zwingend über elektrische Verbindungen, beispielsweise ein Signalkabel, ein Bussystem und dergleichen mit der Prozessoreinheit 165 der Dosiervorrichtung 100 verbunden sein. Auch kabellose Verbindungen, beispielsweise über eine induktiv oder mit Funkwellen arbeitende Lese-/Schreibvorrichtung 175 sind möglich. Insbesondere bietet sich hier die RFID-Technologie an.

Um zur Steuerung und Regelung des Dosiervorgangs entsprechende Steuer- und Regelgrössen zu erfassen, ist die Antriebsvorrichtung 150 elektrisch über eine nicht dargestellte Verbindung mit dem Wägesystem 190 verbunden, auf dessen Lastaufnehmer 191 das Zielgefäss 200 aufgelegt wird. Das Zielgefäss 200 kann ein Zielgefäss-Speichermodul 201 aufweisen, in welches Zielgefäss-Speichermodul 201 vorzugsweise über eine kabellose Verbindung, beispielsweise auch über die Lese-/Schreibvorrichtung 175, Eigenschaftsmerkmale der vorbereiteten Probe wie die Substanzbezeichnung, das Mischungsverhältnis, das Lösungsmittel, die Lösungskonzentration, das Verfalldatum oder ein Fliessparameter der Substanz eingespeichert werden können.

Zwischen der Antriebsvorrichtung 150 und dem Wägesystem 190 ist eine Linearführung 159 angeordnet, welche die beiden mechanisch verbindet. Die Linearführung 159 ermöglicht die Verwendung verschieden ausgestalteter Zielgefässe 200 mit unterschiedlichen Gefässhöhen. Ferner kann die Dosiereinheit 105, 105' beziehungsweise der Flüssigdosierkopf 185 in einen ausreichenden Abstand vom Zielgefäss 200 gebracht werden, so dass Wägewerte mit dem Wägesystem 190 ermittelt werden können, wodurch diese durch die Kraftwirkungen elektrostatisch geladener Teile nur gering oder gar nicht verfälscht werden. Selbstverständlich kann abweichend von der Figur 1 das Wägesystem 190 auch von der Antriebsvorrichtung 150 mechanisch getrennt angeordnet sein, um zu vermeiden, dass sich während des Dosiervorganges Vibrationen der Antriebsvorrichtung 150 auf das Wägesystem 190 übertragen und dadurch die Wägewerte und/oder die Reaktionszeit des Wägesystems 190 beeinträchtigen. Die zur Erfassung der Wägewerte in ausreichendem Abstand zum Zielgefäss 200 beziehungsweise zum Lastaufnehmer 191 angeordnete Dosiereinheit 105, 105' wird als in der ersten Position angeordnet definiert. Die während des Dosiervorgangs möglichst nahe zum Zielgefäss 200 beziehungsweise zum Lastaufnehmer 191 angeordnete Dosiereinheit 105, 105' wird als in der zweiten Position angeordnet definiert. Um die Dosiereinheit von der ersten Position in die zweite Position zu verschieben, ist eine Antriebseinheit mit einer Gewindespindel 188 vorhanden. Selbstverständlich kann an Stelle der Gewindespindel 188 und der Linearführung 159 ein nicht dargestelltes Schwenklager zwischen der Antriebsvorrichtung 150 und dem Wägesystem 190 angeordnet sein, so dass die Antriebsvorrichtung 150 relativ zum Wägesystem 190 verschwenkt werden kann. Dadurch ist die Antriebsvorrichtung 150 und mit ihr die eingesetzte Dosiereinheit 105, 105' in eine erste und in eine zweite Position verschwenkbar, wie dies durch den strichpunktierten Doppelpfeil X angedeutet ist. Ebenso ist natürlich eine horizontale, lineare Verschiebung der Dosiereinheit 105 relativ zum Wägesystem 190 möglich.

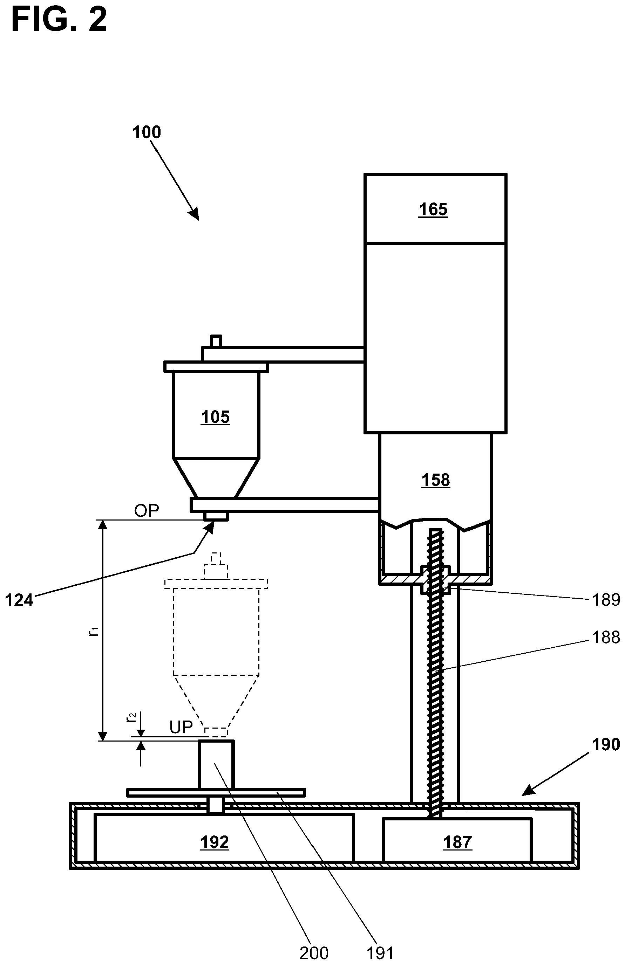

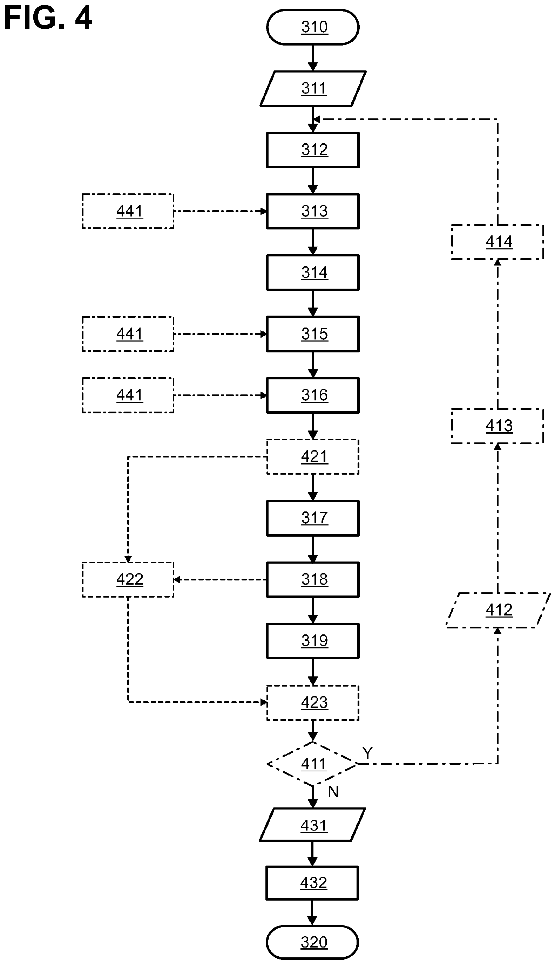

Diese erste Position OP und die zweite Position UP sind in der Figur 2 dargestellt, welche die Dosiervorrichtung 100 der Figur 1 in vereinfachter Aufsicht zeigt. Alle Teile, die mit den in der Figur 1 dargestellten Teilen identisch sind, weisen auch in der Figur 2 dieselben Bezugszeichen auf. Die zweite Position UP entspricht nahezu der Gefässhöhe des Zielgefässes 200, da die Auslassöffnung 124 der Dosiereinheit 105 beim Dosiervorgang möglichst mit minimalem Abstand $r_2$ nahe an der Einfüllöffnung des Zielgefässes 200 angeordnet sein sollte, ohne jedoch dieses zu berühren. Die erste Position OP entspricht vorzugsweise dem maximal möglichen Abstand $r_1$ zwischen der Auslassöffnung 124 und dem Zielgefäss 200 beziehungsweise dem Lastaufnehmer 191, welcher aufgrund der Linearführungslänge erreichbar ist. Wie weiter unten in Figur 4 beschrieben ist, kann aber auch ein anderer, kleinerer Abstand als erste Position OP definiert werden, wenn der Einfluss elektrostatischer Kräfte gering ist oder mittels eines Korrekturwertes korrigiert werden kann. Selbstverständlich kann das erfindungsgemässe Verfahren auch durchgeführt werden, wenn die Dosiereinheit 105, 105' relativ zum Zielgefäss 200 verschwenkt werden kann, wobei in der zweiten Position UP das Zielgefäss 200 und die Dosiereinheit 105, 105' genau übereinander angeordnet sind. Die erste Position OP entspricht folglich der verschwenkten Position, bei welcher die Dosiereinheit 105, 105' seitlich versetzt vom Zielgefäss 200 angeordnet ist.

Im geschnittenen Gehäuse 193 des Wägesystems 190 ist eine Wägezelle 192 angeordnet, die mit dem Lastaufnehmer 191 mechanisch verbunden ist und die auf den Lastaufnehmer 191 aufgelegte Last in ein Wägesignal wandelt. Das Wägesignal wird an die Prozessoreinheit 165 weitergeleitet und dort weiterverarbeitet, beispielsweise in Wägewerte. Ferner ist im Gehäuse 193 eine Antriebseinheit 187 mit der Gewindespindel 188 angeordnet. Die Gewindespindel 188 ist durch das Gehäuse 193 hindurchgeführt und wird von einer Spindelmutter 189 abgegriffen, welche im Unterteil 158 der Antriebsvorrichtung 150 angeordnet ist.

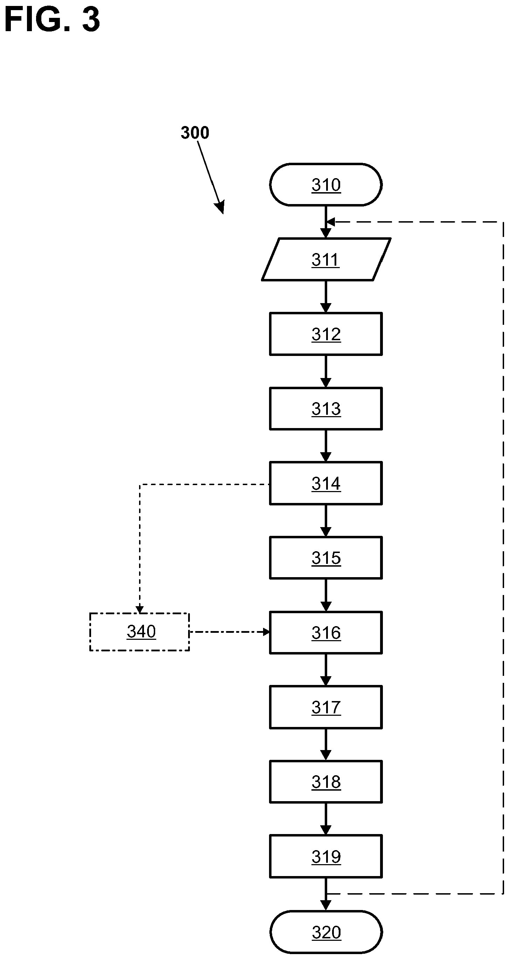

In der Figur 3 ist ein Flussdiagramm des erfindungsgemässen Verfahrens 300 dargestellt, welches nur die absolut notwendigen Verfahrensschritte aufweist. Ausgehend vom Start 310 wird in einem ersten Schritt 311 vom Benutzer mittels einer ersten Eingabe die vorbestimmte Masse Dosiergut abgefragt. In einem zweiten Schritt 312 muss der Benutzer eine neue Dosiereinheit in die Antriebsvorrichtung einsetzen. Im dritten Schritt 313 wird überprüft, ob die Dosiereinheit in der ersten Position angeordnet ist. Sofern dies nicht der Fall ist, muss die Dosiereinheit beziehungsweise die Aufnahmevorrichtung in die erste Position gebracht werden. In einem vierten Schritt 314 wird ein Zielgefäss auf den Lastaufnehmer aufgelegt und ein Start-Wägewert ermittelt. Anschliessend wird im fünften Schritt 315 die Dosiereinheit mit Hilfe der Antriebseinheit in die zweite Position verschoben. In einem Testschritt 340 kann nun ein Test- Wägewert ermittelt werden. Wenn der Start- Wägewert und der Test- Wägewert identisch sind (vorausgesetzt es fand kein Substanzaustrag statt), sind keine oder nur geringe elektrostatische Ladungen vorhanden. Wenn die beiden Wägewerte sich unterscheiden, kann der Dosiervorgang blockiert und der Benutzer gewarnt werden. Selbstverständlich kann auch ein in der Dosiervorrichtung angeordneter Ionisator automatisch oder durch den Benutzer ausgelöst, eingeschaltet werden, wenn mittels des vorangehend beschriebenen Vergleichs elektrostatische Ladungen detektiert werden.

Im sechsten Schritt 316 wird das Dosierprogramm gestartet und Dosiergut gemäss der im ersten Schritt 311 eingegebenen vorbestimmten Masse ausgetragen. Nach Abschluss des Dosiervorgangs wird im siebten Schritt 317 die Dosiereinheit wieder in die erste Position verschoben. Anschliessend wird im achten Schritt 318 ein End-Wägewert durch das Wägesystem ermittelt. Zur Berechnung der erfassten Masse Dosiergutes, wird im neunten Schritt 319 in der Prozessoreinheit der Start- Wägewert vom End- Wägewert subtrahiert. Dieser berechnete Wert kann als erfasste Masse Dosiergut direkt an eine weitere Verarbeitungsstufe, beispielsweise die Anzeigeeinheit weitergeleitet oder in der Speichereinheit zur späteren Weiterverarbeitung eingespeichert werden. Mit der Berechnung der erfassten Masse Dosiergut ist das Ende 320 der Abfolge der absolut notwendigen Verfahrensschritte erreicht.

Aufgrund des Einflusses elektrostatischer Ladungen kann nun die erfasste Masse von der vorbestimmten Masse abweichen. Um die erfasste Masse Dosiergut der vorbestimmten Masse anzunähern, können die vorangehend beschriebenen Schritte 312 bis 319 wiederholt werden, bis der Wert der erfassten Masse innerhalb eines vorgegebenen Toleranzwertes zur vorgegebenen Masse ist. Diese Schlaufe ist mit unterbrochener Linie angedeutet.

Wie in der Figur 4 dargestellt ist, können diese Verfahrensschritte durch weitere Verfahrensschritte ergänzt werden Die Figur 4 zeigt ein ausführliches Flussdiagramm des erfindungsgemässen Verfahrens 400 mit weiteren möglichen Verfahrensschritten, wie sie in einem Computerprogramm abgebildet sein können. Die in Zusammenhang mit der Figur 3 bereits erörterten Schritte weisen dieselben Bezugszeichen auf und werden nicht mehr erklärt.

Eine erste Ergänzung bilden vier Mischungsschritte 411,412,413,414. Im ersten Mischungsschritt 411, welcher nach dem neunten Schritt 319 oder nach dem weiter unten erklärten, dritten Korrekturschritt 423 erfolgt, wird beim Benutzer, in der Speichereinheit oder bei einem übergeordneten Prozessleitsystem abgefragt, ob mit der bereits ins Zielgefäss eindosierten Substanz eine Mischung hergestellt werden soll. Wird dies bejaht, werden die nachfolgenden Mischungsschritte 412, 413, 414 durchgeführt und der zweite Schritt 312 bis neunte Schritt 319 wiederholt.

Der zweite Mischungsschritt 412 besteht darin, vom Benutzer, von der Speichereinheit oder vom übergeordneten Prozessleitsystem das Mischungsverhältnis abzufragen. Im dritten Mischungsschritt 413 wird die in der Aufnahmevorrichtung eingesetzte Dosiereinheit entfernt. Im vierten Mischungsschritt 414 wird ausgehend von der erfassten Masse Dosiergut und dem Mischungsverhältnis die Masse der hinzu zudosierenden Substanz berechnet. Anschliessend folgen der zweite Schritt 312 bis neunte Schritt 319.

Nachdem der neunte Schritt 319 zum zweiten Mal durchgeführt wurde, erfolgt die Abfrage des ersten Mischungsschritts 411 zum zweiten Mal, wodurch der im Zielgefäss aus zwei Substanzen bestehenden Mischung eine weitere Substanz im gewünschten Mischungsverhältnis hinzugefügt werden kann. Sinngemäss zur in Figur 3 beschriebenen Schlaufe können mehrere Durchgänge mit derselben Dosiereinheit auch angewendet werden, um das gewünschte Mischungsverhältnis mit einem vorgegebenen Mischungstoleranzwert zu erreichen.

Auch wenn der Start- Wägewert und der End- Wägewert in der ersten Position ermittelt werden, können diese immer noch fehlerbehaftet sein, da der Abstand zwischen der ersten Position und der zweiten Position konstruktionsbedingt beschränkt ist. Mittels Korrekturschritten 421, 422, 423 lässt sich dieser Restfehler noch korrigieren, so dass die erfasste Masse beziehungsweise dieser unkorrigierte Istwert noch korrigiert werden kann. Der erste Korrekturschritt 421 dient der Erfassung eines Fehler- Wägewerts und erfolgt zwischen dem sechsten Schritt 316 und dem siebten Schritt 317, unmittelbar nach dem Dosiervorgang, wenn die Dosiereinheit noch in der zweiten Position angeordnet ist. Der Fehler- Wägewert und der im achten Schritt 318 erfasste End- Wägewert werden nun im zweiten Korrekturschritt 422 verarbeitet.

Aus dem coulombschen Gesetz

$$F = \frac{1}{4\pi\varepsilon_0} \frac{q_1 \cdot q_2}{r^2},$$

kann mittels des Abstandes $r_1$ der ersten Position zum Lastaufnehmer, des Abstandes $r_2$ der zweiten Position zum Lastaufnehmer und der Differenz des gemessenen Fehler-Wägewerts und End- Wägewerts die in der oberen Position wirkende, elektrostatische Kraft beziehungsweise der Korrekturwert errechnet werden. Näherungsweise ergibt die aus dem coulombschen Gesetz abgeleitete Formel

$$\text{Korrekturwert}_{\text{(in erster Position)}} = \frac{(\text{Fehler- Wägewert} - \text{End- Wägewert}) * r_2^2}{r_1^2 - r_2^2}$$

einen Korrekturwert, der dieselbe Einheit wie die Wägewerte hat und von der im neunten Schritt 319 berechneten, erfassten Masse subtrahiert werden kann. Diese Subtraktion erfolgt im dritten Korrekturschritt 423 und ergibt den Wert der korrigierten Masse, welcher an eine Anzeigeeinheit übermittelt und/oder in der Speichereinheit abgespeichert und/oder an das Prozessleitsystem weitergeleitet wird.

Nach dem Abschluss der Dosierung von Substanzen muss gegebenenfalls noch ein Lösungsmittel in das Zielgefäss eindosiert werden um die Probenvorbereitung zu vervollständigen. Je nachdem ob die Korrekturschritte 421, 422, 423 angewendet wurden oder nicht, kann ausgehend von der erfassten Masse oder der korrigierten Masse und der gewünschten Konzentration die Masse des ausgewählten Lösungsmittels berechnet werden. Die Abfrage der Konzentration und des ausgewählten Lösungsmittels erfolgt im ersten Probenvorbereitungsschritt 431, die Berechnung der Lösungsmittelmasse und die Zudosierung des Lösungsmittels im zweiten Probenvorbereitungsschritt 432. Die Bereitstellung einer Probe ist nach der Zudosierung des Lösungsmittels zu Ende 320.

Ferner ist noch zu erwähnen, dass der in Figur 1 dargestellte Ionisator während der verschiedenen Schritte oder zwischen allen Schritten des Verfahrens 400 eingesetzt werden kann. Beispielsweise kann dessen Einsatz 441 während des dritten Schritts 313, des fünften Schritts 315 und des sechsten Schritts 316 erfolgen.

Anstelle des Benutzers können selbstverständlich auch eine Beschickungsvorrichtung und ein Prozessleitsystem treten, um eine vollautomatische Probenvorbereitung zu ermöglichen.

## Bezugszeichenliste

| | |
|---|---|
| 100 | Dosiervorrichtung |
| 105,105' | Dosiereinheit |
| 110',110 | Entnahmegefäss |
| 111 | erstes Formelement |
| 113 | Deckel |
| 114 | Aussparung |
| 115',115 | Speichermodul |
| 121 | zweites Formelement |
| 122 | Dosierkopf |
| 123 | Speichermodul |
| 124 | Auslassöffnung |
| 130 | Durchtrittsstelle |
| 131 | Kupplungsteil |
| 132 | Verschlusswelle |
| 150 | Antriebsvorrichtung |
| 151 | erstes Gegenstück |
| 152 | Schlitzende |
| 153 | Rückhalteklinke |
| 154 | Kupplungshülse |
| 155 | Antrieb |
| 156 | Antriebswelle |
| 157 | Oberteil |
| 158 | Unterteil |
| 159 | Linearführung |
| 160 | Verriegelungsvorrichtung |
| 165 | Prozessoreinheit |
| 166 | Speichereinheit |
| 170 | Verdrehsicherung |
| 175 | Lese-/ Schreibvorrichtung |
| 181 | zweites Gegenstück |
| 185 | Flüssigdosierkopf |
| 186 | Schlauchanschluss |

| 187 | Antriebseinheit |
|---|---|
| 188 | Gewindespindel |
| 189 | Spindelmutter |
| 190 | Wägesystem |
| 191 | Lastaufnehmer |
| 192 | Wägezelle |
| 193 | Gehäuse |
| 200 | Zielgefäss |
| 201 | Zielgefäss-Speichereinheit |
| 250 | Ionisator |
| 270 | Ein-/Ausgabeeinheit |
| 400, 300 | Verfahren |
| 310 | Start |
| 311 | 1. Schritt: Eingabe vorbestimmte Masse Dosiergut |
| 312 | 2. Schritt: Einsetzen neue Dosiereinheit |
| 313 | 3. Schritt: Dosiereinheit in erste Position bringen |
| 314 | 4. Schritt: Zielgefäss auflegen und Start- Wägewert ermitteln |
| 315 | 5. Schritt: Dosiereinheit in zweite Position bringen |
| 316 | 6. Schritt: Dosiervorgang |
| 317 | 7. Schritt: Dosiereinheit in erste Position bringen |
| 318 | 8. Schritt: End- Wägewert ermitteln |
| 319 | 9. Schritt: Berechnung der erfassten Masse Dosiergut |
| 320 | Ende |
| 340 | Testschritt: Erfassung Test- Wägewert und Vergleich mit Start- Wägewert |
| 411 | 1. Mischungsschritt: Abfrage ob Pulvermischung gewünscht |
| 412 | 2. Mischungsschritt: Eingabe/Abfrage Mischungsverhältnis |
| 413 | 3. Mischungsschritt: entfernen der eingesetzten Dosiereinheit |
| 414 | 4. Mischungsschritt: Masse der hinzu zudosierenden Substanz berechnen |
| 421 | 1. Korrekturschritt: Fehler- Wägewert ermitteln |
| 422 | 2. Korrekturschritt: Berechnung Korrekturwert |
| 423 | 3. Korrekturschritt: Berechnung korrigierte Masse |
| 431 | 1. Probenvorbereitungsschritt: Abfrage gewünschte Konzentration |
| 432 | 2. Probenvorbereitungsschritt: Berechnung und Zudosierung Lösungsmittel |
| 441 | Einsatz des Ionisators |

**Patentansprüche**

1. Verfahren zur Bereitstellung von Proben mittels einer Dosiervorrichtung (100), welche ein Wägesystem (190) mit einem Lastaufnehmer (191), eine Prozessoreinheit (165), eine Speichereinheit (166), einen Ionisator (250) und eine auswechselbare Dosiereinheit (105, 105') umfasst, wobei auf den Lastaufnehmer (191) ein Zielgefäss (200) auflegbar ist, wobei die Dosiereinheit (105, 105') und/oder das Zielgefäss (200) elektrisch isolierendes Material aufweist und wobei die Dosiereinheit (105, 105') oberhalb des Lastaufnehmers (191) angeordnet ist und relativ zum Lastaufnehmer (191) zwischen einer ersten Position (OP) und einer zweiten Position (UP) verschiebbar oder verschwenkbar ist, **gekennzeichnet durch** die Schritte (311, 312, 313, 314, 315, 316, 317, 318), dass

• während die Dosiereinheit (105, 105') in der ersten Position (OP) ruht und auf dem Lastaufnehmer (191) ein Zielgefäss (200) aufgelegt ist, durch das Wägesystem (190) ein Start- Wägewert ermittelt und in der Speichereinheit (166) abgespeichert wird,
• die Dosiereinheit (105, 105') in die zweite Position (UP) gebracht wird,
• der Ionisator (250) eingeschaltet wird, wenn die Dosiereinheit von der ersten in die zweite Position verschoben wird,
• ein Dosiervorgang (316) durchgeführt wird, wobei mittels der Prozessoreinheit (165) Dosiergut in einer vorbestimmten Masse aus der Dosiereinheit (105, 105') in das Zielgefäss (200) ausgetragen wird,
• der Ionisator (250) während des Dosiervorgangs periodisch ein- und ausgeschaltet wird, wobei bei der Erfassung von Wägezwischenwerten der Ionisator (250) ausgeschaltet wird,
• die Dosiereinheit (105, 105') in die erste Position (OP) gebracht wird und
• während die Dosiereinheit (105, 105') in der ersten Position (OP) ruht, durch das Wägesystem (190) ein End- Wägewert ermittelt wird.

2. Verfahren nach Anspruch 1, **dadurch gekennzeichnet, dass** durch einen Testschritt (340) zur Detektierung elektrostatischer Ladungen in der zweiten Position (UP) und vor der Durchführung eines Dosiervorganges (316) ein Test-Wägewert ermittelt wird und dieser mit dem Start- Wägewert verglichen wird.

3. Verfahren nach Anspruch 1 oder 2, **dadurch gekennzeichnet, dass** in der Prozessoreinheit (165) der Start- Wägewert vom End- Wägewert subtrahiert wird und das Ergebnis als erfasste Masse des Dosiergutes in der Speichereinheit (166) abgespeichert oder an eine Ausgabeeinheit (270) übermittelt wird.

4. Verfahren nach Anspruch 3, **gekennzeichnet durch** die weiteren Schritte (411, 412, 413, 414), dass

   • ausgehend von der erfassten Masse des Dosierguts und einem gewünschten Mischungsverhältnis, die Masse eines weiteren Dosierguts durch die Prozessoreinheit (165) errechnet wird,
   • die Dosiereinheit (105) des bereits ausgetragenen Dosiergutes durch eine weitere Dosiereinheit (105') mit dem weiteren Dosiergut ersetzt wird und
   • die Verfahrensschritte (311, 312, 313, 314, 315, 316, 317, 318) des vorangehenden Anspruchs 1 mit der weiteren Dosiereinheit (105') wiederholt werden.

5. Verfahren nach Anspruch 3 oder 4, **gekennzeichnet durch** die weiteren Schritte (421, 422, 423), dass

   • nach Abschluss des Dosiervorganges in der zweiten Position (UP) durch das Wägesystem (190) ein Fehler-Wägewert ermittelt wird,
   • dass aus dem End- Wägewert, dem Fehler- Wägewert und dem Abstand zwischen der ersten Position (OP) und der zweiten Position (UP) ein Korrekturwert berechnet wird und
   • aus der erfassten Masse des Dosiergutes und dem Korrekturwert die korrigierte Masse des Dosiergutes errechnet wird.

6. Verfahren nach einem der Ansprüche 3 bis 5, **dadurch gekennzeichnet, dass** ausgehend von der erfassten oder korrigierten Masse Dosiergut und einer gewünschten Konzentration die Masse eines hinzuzufügenden Lösungsmittels durch die Prozessoreinheit (165) errechnet wird.

7. Verfahren nach einem der Ansprüche 1 bis 6, **dadurch gekennzeichnet, dass** während des Dosiervorgangs durch das Wägesystem (190) kontinuierlich, in diskreten, ereignisbestimmten oder zufälligen Zeitintervallen Wägezwischenwerte erfasst und diese zur Steuerung des Dosiervorganges der Prozessoreinheit (165) zugeführt werden.

8. Verfahren nach Anspruch 7, **dadurch gekennzeichnet, dass** durch eine Auswertung mindestens zweier Wägezwischenwerte, deren Zeitintervall und des zum Zeitpunkt der Erfassung der Wägezwischenwerte vorhandenen Auslassquerschnitts der Dosiereinheit (105, 105') ein die Fliesseigenschaften des Dosierguts charakterisierender Fliessparameter ermittelt wird.

9. Verfahren nach Anspruch 8, **dadurch gekennzeichnet, dass** mittels des Fliessparameters ein Schliess-Zeitprofil geschätzt wird, nach dem der Auslassquerschnitt der Dosiereinheit (105, 105') geschlossen wird.

10. Verfahren nach einem der Ansprüche 1 bis 9, **dadurch gekennzeichnet, dass** die Dosiervorrichtung (100) einen Ionisator (250) aufweist und dieser eingeschaltet ist, wenn die Dosiereinheit (105, 105') von der ersten Position (OP) in die zweite Position (UP) verschoben wird.

11. Verfahren nach Anspruch 10, **dadurch gekennzeichnet, dass** der Ionisator (250) während des Dosiervorganges periodisch ein- und ausgeschaltet wird.

12. Verfahren nach Anspruch 11, **dadurch gekennzeichnet, dass** Wägezwischenwerte nur dann erfasst werden, wenn der Ionisator (250) ausgeschaltet ist.

13. Computerprogramm, das in der Prozessoreinheit (165) einer Dosiervorrichtung (100) zur Bereitstellung von Proben ausführbar ist, **dadurch gekennzeichnet, dass** in diesem Computerprogramm die Verfahrensschritte (311, 312, 313, 314, 315, 316, 317, 318, ...) nach einem der Ansprüche 1 bis 12 implementiert sind.

**14.** Dosiervorrichtung (100), welche ein Wägesystem (190), eine Prozessoreinheit (165), eine Speichereinheit (166), einen Ionisator (250) und eine auswechselbare Dosiereinheit (105, 105') umfasst, wobei die Dosiereinheit (105, 105') oberhalb eines Lastaufnehmers (191) des Wägesystems (190) angeordnet ist und relativ zum Lastaufnehmer (191) zwischen einer ersten Position (OP) und einer zweiten Position (UP) verschiebbar ist, **dadurch gekennzeichnet, dass** in der Speichereinheit (166) ein Computerprogramm nach Anspruch 13 abgespeichert ist.

**15.** Dosiervorrichtung (100) nach Anspruch 14, **dadurch gekennzeichnet, dass** die Dosiereinheit (105, 105') mit einer vertikalen Linearführung (159) geführt ist und mittels einer Antriebseinheit (187) zwischen der ersten Position (OP) und der zweiten Position (UP) verschiebbar ist.

**16.** Dosiervorrichtung (100) nach einem der Ansprüche 13 bis 15, **dadurch gekennzeichnet, dass** ein Flüssigdosierkopf (185) vorhanden ist, mittels welchem eine durch die Prozessoreinheit (165) errechnete Lösungsmittelmasse in das Zielgefäss (200) dosierbar ist.

**Claims**

**1.** Method for the preparation of samples by means of a dosage-dispensing device (100) that comprises a weighing system (190) with a load receiver (191), a processor unit (165), a memory unit (166), an ionizer (250) and an exchangeable dosage-dispensing unit (105, 105'), wherein a target container (200) can be set on the load receiver (191), wherein the dosage-dispensing unit (105, 105') and/or the target container (191) comprises electrically insulating material, and wherein the dosage-dispensing unit (105, 105') is arranged above the load receiver (191) with the capability to slide or swivel between a first position (OP) and a second position (UP) relative to the load receiver (191), said method being **characterized by** the steps (311, 312, 313, 314, 315, 316, 317, 318) according to which

• while the dosage-dispensing unit (105, 105') is at rest in the first position (OP) and a target container (200) is in place on the load receiver (191), a starting weight value is determined by the weighing system (190) and stored in the memory unit (166);
• the dosage-dispensing unit (105, 105') is brought into the second position (UP);
• the ionizer (250) is switched on, as the dosage-dispensing unit is moved from the first position into the second position;
• a dosage-dispensing cycle (316) is performed, wherein dosage material in a predetermined amount of mass is delivered from the dosage-dispensing unit (105, 105') into the target container (200) by means of the processor unit (165);
• the ionizer (250) is switched on and off periodically during the dosage-dispensing cycle, wherein during the determination of intermediate values the ionizer (250) is switched off;
• the dosage-dispensing unit (105, 105') is brought into the first position (OP); and
• while the dosage-dispensing unit (105, 105') is at rest in the first position (OP), an ending weight value is determined by the weighing system (190).

**2.** Method according to claim 1, **characterized in that** by way of a test step (340) serving to detect electrostatic charges, a test weight value is determined in the second position (UP) and prior to performing a dosage-dispensing cycle (316), and that said test weight value is compared to the starting weight value.

**3.** Method according to claim 1 or 2, **characterized in that** the starting weight value is subtracted from the ending weight value in the processor unit (165) and the result is stored in the memory unit (166) or transmitted to an output unit (270) as the weighed mass of the dosage material.

**4.** Method according to claim 3, **characterized by** the further steps (411, 412, 413, 414) according to which

• based on the weighed mass of the dosage material and a desired mix ratio, the mass amount of a further dosage material is calculated by the processor unit (165);
• the dosage-dispensing unit (105) with the dosage material that has already been dispensed is replaced by a further dosage-dispensing unit (105') with the further dosage material; and
• the steps (311, 312, 313, 314, 315, 316, 317, 318) of claim 1 are repeated with the further dosage-dispensing unit (105').

**5.** Method according to claim 3 or 4, **characterized by** the further steps (421, 422, 423) according to which:

• after the dosage-dispensing process has been completed and with the dosage-dispensing unit in the second position (UP), an error weight value is determined by the weighing system (190);

• based on the ending weight value, the error weight value and the distance between the first position (OP) and the second position (UP), a correction value is calculated; and

• based on the weighed mass of the dosage material and the correction value, the corrected mass of the dosage material is calculated.

6. Method according to one of the claims 3 to 5, **characterized in that** based on the weighed mass or the corrected mass of the dosage material and based on a desired concentration, the mass of a solvent to be added is calculated by the processor unit (165).

7. Method according to one of the claims 1 to 6, **characterized in that** during the dosage-dispensing process, the weighing system (190) determines intermediate weight values continuously, at discrete, event-triggered or random intervals, and that said intermediate weight values are delivered to the processor unit (165) for the control of the dosage-dispensing process.

8. Method according to claim 7, **characterized in that** through an evaluation of at least two intermediate weight values, the time interval between them, and the aperture cross-section of the outlet orifice of the dosage-dispensing unit (105, 105') at the times when the intermediate weight values were measured, a flow parameter is determined which characterizes the flow properties of the dosage material.

9. Method according to claim 8, **characterized in that** by means of the flow parameter a time profile for the closure is estimated based on which the aperture cross-section of the outlet orifice of the dosage-dispensing unit (105, 105') is closed.

10. Method according to one of the claims 1 to 9, **characterized in that** the dosage-dispensing device (100) comprises an ionizer (250) and that the latter is in operation during the time when the dosage-dispensing unit (105, 105') is shifted from the first position (OP) into the second position (UP).

11. Method according to claim 10, **characterized in that** the ionizer (250) is switched on and off periodically during the dosage-dispensing process.

12. Method according to claim 11, **characterized in that** intermediate weight values are measured only while the ionizer (250) is in the switched-off state.

13. Computer program which is executable in the processor unit (165) of a dosage-dispensing device (100) for the preparation of samples, **characterized in that** in said computer program the process steps (311, 312, 313, 314, 315, 316, 317, 318, ...) according to one of the claims 1 to 12 are implemented.

14. Dosage-dispensing device (100) comprising a weighing system (190), a processor unit (165), a memory unit (166), an ionizer (250) and an exchangeable dosage-dispensing unit (105, 105'), wherein the dosage-dispensing unit (105, 105') is arranged above a load receiver (191) of the weighing system (190) and is movable in relation to the load receiver (191) between a first position (OP) and a second position (UP), **characterized in that** a computer program according to claim 13 is stored in the memory unit (166).

15. Dosage-dispensing device (100) according to claim 14, **characterized in that** the dosage-dispensing unit (105, 105') is constrained in its mobility by a vertical linear guide (159) and is movable between the first position (OP) and the second position (UP) by means of a drive unit (187).

16. Dosage-dispensing device (100) according to one of the claims 13 to 15, **characterized in that** a dosage-dispensing head (185) for liquids is available by means of which a mass quantity of solvent that has been calculated by the processor unit (165) can be dispensed into the target container (200).

**Revendications**

1. Procédé pour la mise à disposition d'échantillons au moyen d'un dispositif de dosage (100) comportant un système de pesage (190) avec un récepteur de charge (191), une unité de processeur (165), une unité de mémoire (166), un ionisateur (250) et une unité de dosage remplaçable (105, 105'), dans lequel un récipient cible (200) peut être placé sur le récepteur de charge (191), dans lequel l'unité de dosage (105, 105') et/ou le récipient cible (200) présente un matériau électriquement isolant et dans lequel l'unité de dosage (105, 105') est disposée au-dessus du récepteur de charge (191) et peut être déplacée ou pivotée par rapport au récepteur de charge (191) entre une première position (OP) et une deuxième position (UP),
**caractérisé par** les étapes suivantes (311, 312, 313, 314, 315, 316, 317, 318), dans lesquelles

- pendant que l'unité de dosage (105, 105') repose dans la première position (OP) et qu'un récipient cible (200) est placé sur le récepteur de charge (191), une valeur de pesage initiale est déterminée par le système de pesage (190) et enregistrée dans l'unité de mémoire (166),
- l'unité de dosage (105, 105') est mise dans la deuxième position (UP),
- l'ionisateur (250) est activé lorsque l'unité de dosage est déplacée de la première vers la deuxième position,
- une opération de dosage (316) est réalisée, dans laquelle un produit à doser est déchargé en une quantité prédéfinie de l'unité de dosage (105, 105') vers le récipient cible (200) au moyen de l'unité de processeur (165),
- l'ionisateur (250) est activé et désactivé périodiquement au cours d'une opération de dosage, l'ionisateur (250) étant désactivé lors de la détection de valeurs de pesage intermédiaires,
- l'unité de dosage (105, 105') est mise dans la deuxième position (UP), et
- une valeur de pesage finale est déterminée par le système de pesage (190) pendant que l'unité de dosage (105, 105') repose dans la première position (OP).

2.  Procédé selon la revendication 1, **caractérisé en ce qu'**une valeur de pesage de test est déterminée par une étape de test (340) pour la détection de charges électrostatiques dans la deuxième position (UP) et avant l'exécution d'une opération de dosage (316), et **en ce que** celle-ci est comparée avec la valeur de pesage initiale.

3.  Procédé selon la revendication 1 ou 2, **caractérisé en ce que** dans l'unité de processeur (165), la valeur de pesage initiale est soustraite de la valeur de pesage finale et **en ce que** le résultat est enregistré dans l'unité de mémoire (166) en tant que quantité détectée ou transmise à une unité de sortie (270).

4.  Procédé selon la revendication 3, **caractérisé par** les étapes supplémentaires suivantes (411, 412, 413, 414), dans lesquelles

- à partir de la quantité détectée du produit à doser et d'un rapport de mélange souhaité, la quantité d'un autre produit à doser est calculée par l'unité de processeur (165),
- l'unité de dosage (105) du produit à doser déjà déchargé est remplacée par une autre unité de dosage (105') avec l'autre produit à doser, et
- les étapes de procédé (311, 312, 313, 314, 315, 316, 317, 318) de la revendication précédente 1 sont répétées avec l'autre unité de dosage (105').

5.  Procédé selon la revendication 3 ou 4, **caractérisé par** les étapes supplémentaires suivantes (421, 422, 423), dans lesquelles

- après la fin de l'opération de dosage dans la deuxième position (UP), une valeur de pesage d'erreur est calculée par le système de pesage (190),
- en ce qu'une valeur de correction est calculée à partir de la valeur de pesage finale, de la valeur de pesage d'erreur et de l'écart entre la première position (OP) et la deuxième position (UP), et
- la quantité corrigée du produit à doser est calculée à partir de la quantité déterminée et de la valeur de correction.

6.  Procédé selon l'une des revendications 3 à 5, **caractérisé en ce que** la quantité d'un solvant à ajouter est calculée par l'unité de processeur (165) à partir de la quantité de produit à doser déterminée ou corrigée et d'une concentration souhaitée.

7.  Procédé selon l'une des revendications 1 à 6, **caractérisé en ce que** pendant l'opération de dosage exécutée par le système de pesage (190), des valeurs de pesage intermédiaires sont calculées en continu, à des intervalles de temps discrets aléatoires ou déterminés en fonction d'un évènement, et celles-ci sont fournies à l'unité de processeur (165) pour contrôler l'opération de dosage.

8.  Procédé selon la revendication 7, **caractérisé en ce qu'**un paramètre d'écoulement caractérisant les propriétés d'écoulement du produit à doser est déterminé par une évaluation d'au moins deux valeurs de pesage intermédiaires,

**EP 2 426 468 B1**

de leur intervalle de temps et de la section transversale d'évacuation de l'unité de dosage (105, 105') au moment de la détermination des valeurs de pesage intermédiaires.

9. Procédé selon la revendication 8, **caractérisé en ce que** le paramètres d'écoulement permet d'estimer un profil de temps de fermeture pendant lequel la section transversale d'évacuation de l'unité de dosage (105, 105') est fermée.

10. Procédé selon l'une des revendications 1 à 9, **caractérisé en ce que** le dispositif de dosage (100) présente un ionisateur (250) et **en ce que** celui-ci est activé lorsque l'unité de dosage (105, 105') est déplacée de la première position (OP) vers la deuxième position (UP).

11. Procédé selon la revendication 10, **caractérisé en ce que** l'ionisateur (250) est activé et désactivé périodiquement pendant l'opération de dosage.

12. Procédé selon la revendication 11, **caractérisé en ce que** des valeurs de pesage intermédiaires sont déterminées uniquement lorsque l'ionisateur (250) est désactivé.

13. Programme informatique apte à être exécuté dans l'unité de processeur (165) d'un dispositif de dosage (100) pour la mise à disposition d'échantillons, **caractérisé en ce que** dans ce programme informatique, les étapes de procédé (311, 312, 313, 314, 315, 316, 317, 318, ...) selon l'une des revendications 1 à 12 sont mises en oeuvre.

14. Dispositif de dosage (100) comprenant un système de pesage (190), une unité de processeur (165), une unité de mémoire (166), un ionisateur (250) et une unité de dosage (105, 105') remplaçable, dans lequel l'unité de dosage (105, 105') est disposée au-dessus d'un récepteur de charge (191) du système de pesage (190) et peut être déplacée par rapport au récepteur de charge (191) entre une première position (OP) et une deuxième position (UP), **caractérisé en ce qu'**un programme informatique selon la revendication 13 est enregistré dans l'unité de mémoire (166).

15. Dispositif de dosage (100) selon la revendication 14, **caractérisé en ce que** l'unité de dosage (105, 105') est conçue avec un guidage linéaire vertical (159) et peut être déplacée entre la première position (OP) et la deuxième position (UP) au moyen d'une unité d'entraînement (187).

16. Dispositif de dosage (100) selon l'une des revendications 13 à 15, **caractérisé en ce qu'**il est prévu une tête de dosage de fluide (185) au moyen de laquelle une quantité de solvant calculée par l'unité de processeur (165) peut être dosée dans le récipient cible (200).

# FIG. 1

# FIG. 2

**100**

**165**

**105**

**158**

OP

**124**

$r_1$

$r_2$

UP

**189**

**188**

**190**

**192**

**187**

**200**

**191**

# FIG. 3

300

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1947427 A1
- WO 2006003377 A1
- DE 19920494 A1